# EUROPÄISCHE PATENTSCHRIFT

(11) **EP 1 530 672 B1**
(45) Veröffentlichungstag und Bekanntmachung des Hinweises auf die Patenterteilung: **09.01.2008**
(21) Anmeldenummer: 03763708.9
(22) Anmeldetag: 04.07.2003
(51) Int. Cl.: F01N 3/28, B01D 53/94

(54) **VERBRENNUNGSMOTORANLAGE MIT DIREKTEINSPRITZENDEM OTTOMOTOR UND EINEM KATALYSATORSYSTEM**
INTERNAL COMBUSTION ENGINE INSTALLATION COMPRISING A DIRECT-INJECTION OTTO ENGINE AND A CATALYST SYSTEM
INSTALLATION DE MOTEUR A COMBUSTION INTERNE COMPRENANT UN MOTEUR A ALLUMAGE PAR ETINCELLE A INJECTION DIRECTE ET UN SYSTEME CATALYTIQUE

(30) Priorität: 15.07.2002 DE 10232698; 11.10.2002 DE 10248508
(43) Veröffentlichungstag der Anmeldung: 18.05.2005
(73) Patentinhaber: Volkswagen Aktiengesellschaft, 38436 Wolfsburg (DE)
(72) Erfinder: POTT, Ekkehard, 38518 Gifhorn (DE); SPERLING, Helmut, 38518 Gifhorn (DE)
(74) Vertreter: Reinstädler, Diane
(86) Internationale Anmeldenummer: PCT/EP2003/007178
(87) Internationale Veröffentlichungsnummer: WO 2004/007920

(56) Entgegenhaltungen:
- EP-A- 1 123 729
- ANDRIESSE, D. ET AL.: "The New Alfa-Romeo 2 Litre JTI Engine with Direct Gasoline Injection" 10. AACHENER KOLLOQUIUM FAHRZEUG- UND MOTORTECHNIK 2001, Bd. 2, 8. - 10. Oktober 2001, Seiten 753-772, XP002257837 Aachen, DE in der Anmeldung erwähnt

## Beschreibung

Die Erfindung betrifft eine Verbrennungsmotoranlage mit den im Oberbegriff des Anspruchs 1 genannten Merkmalen.

Zur Nachbehandlung von Abgasen von Verbrennungskraftmaschinen ist es allgemein üblich, das Abgas katalytisch zu reinigen. Dazu wird das Abgas über mindestens einen Katalysator geleitet, der eine Konvertierung einer oder mehrerer Schadstoffkomponenten des Abgases vornimmt. Es sind unterschiedliche Arten von Katalysatoren bekannt. Oxidationskatalysatoren fördern die Oxidation von unverbrannten Kohlenwasserstoffen (HC) und Kohlenmonoxid (CO), während Reduktionskatalysatoren eine Reduzierung von Stickoxiden (NOₓ) des Abgases unterstützen. Ferner werden 3-Wege-Katalysatoren verwendet, um die Konvertierung der drei vorgenannten Komponenten (HC, CO, NOₓ) gleichzeitig zu katalysieren. Die Verwendung eines 3-Wege-Katalysators ist jedoch nur möglich, wenn ein streng stöchiometrisches Luft-Kraftstoff-Verhältnis bei λ = 1 vorliegt. siehe z.B. EP 1 123 729.

Bei Fahrzeugen mit direkteinspritzenden Ottomotoren, die auch geschichtet betriebenen werden können, werden vergleichsweise großvolumige Katalysatorsysteme mit einem Katalysatorvolumen KV > 0,9 x Motorhubvolumen VH eingesetzt. Dies betrifft insbesondere Fahrzeuge, die im Neuen Europäischen Fahrzyklus (NEFZ) mit thermisch ungeschädigten Katalysatoren eine HC-Emission von < 0,07 g/km und eine NOₓ-Emission von < 0,05 g/km erreichen.

Neben diesen direkteinspritzenden Ottomotoren, die bis zu einem effektiven Mitteldruck von etwa 3 bar sowie einer Drehzahl von etwa 3000 U/min im Schichtlademodus betrieben werden können, sind direkteinspritzende Ottomotoren bekannt, die nicht schichtladefähig sind oder nur in einem sehr eingeschränkten leerlaufnahen Bereich schichtladefähig sind (Alfa 2,0 JTS, The new Alfa Romeo 2 Itr JTS engine with Direct Gasoline Injection, 10. Aachener Fahrzeug- und Motorenkolloquium 2001). Auch diese Fahrzeuge und Motoren weisen analog zu schichtladefähigen direkteinspritzenden Ottomotoren relativ große Katalysatorvolumina auf.

Die großen Katalysatorvolumina bieten zwar einerseits eine hohe Emissionssicherheit, jedoch werden zur Herstellung der Katalysatoren bekanntermaßen Edelmetalle verwendet, so dass mit den großen Katalysatorvolumina nachteilhafterweise hohe Edelmetallkosten einhergehen.

Der Erfindung liegt daher die Aufgabe zugrunde, eine Verbrennungsmotoranlage mit einem direkteinspritzenden Ottomotor und einem Katalysatorsystem zu schaffen, die im Vergleich zu Verbrennungsmotoranlagen nach dem Stand der Technik bei vergleichbarer niedriger Emission geringere Herstellungskosten hinsichtlich des Katalysatorsystems aufweist.

Diese Aufgabe wird durch eine Verbrennungsmotoranlage mit den im Anspruch 1 genannten Merkmalen gelöst.

Erfindungsgemäß ist eine Verbrennungsmotoranlage vorgesehen, die einen direkteinspritzenden Ottomotor, der nicht oder nur zu einem geringen Anteil schichtladefähig ist, und ein dem Ottomotor nachgeordnetes Katalysatorsystem, das mindestens einen Katalysator besitzt, aufweist, bei der das Katalysatorsystem insgesamt ein Katalysatorvolumen (KV) von 0,8 bis 0,5 x Motorhubvolumen (VH) oder von 1,3 bis 0,7 l pro 100 kW Motornennleistung (PNENN) aufweist und bei der die mittlere spezifische Edelmetallbeladung des oder der Katalysator/en des Katalysatorsystems unter 3,59 g/dm³ (100 g/ft³), vorzugsweise unter 2,87 g/dm³ (80 g/ft³), ideal unter 2,15 g/dm³ (60 g/ft³) liegt, wobei die gesamte Edelmetallmasse des oder der Katalysator/en unter 2 g, vorzugsweise unter 1,6 g, ideal unter 1,2 g, optimal unter 0,8 g pro Liter Motorhubraum (VH) oder unter 3,5 g, vorzugsweise unter 2,8 g, ideal unter 2,3 g, optimal unter 1,8 g pro 100 kW Nennleistung (PNENN) des Ottomotors liegt.

Trotz dieses geringen Katalysatorvolumens beziehungsweise dieser geringen Edelmetallbeladung werden mit der erfindungsgemäßen Verbrennungsmotoranlage die Emissionsgrenzwerte für EU IV erfüllt. Dies gilt insbesondere auch noch für gealterte Katalysatoren. Eine solche Alterung kann beispielsweise durch abwechselndes Beaufschlagen des Katalysators mit Abgasen aus einem mindestens 90%igen Volllastbetrieb und Schubabschaltung erreicht werden. Erfindungsgemäß wurden Untersuchungen mit gleichartigen Verbrennungsmotoranlagen vorgenommen, die sich hinsichtlich der Kraftstoffeinspritzung unterschieden. Zum einen wurden Messungen mit einem Saugrohreinspritzer, zum anderen Messungen mit direkteinspritzenden Ottomotoren vorgenommen. Dabei zeigte sich, dass die direkteinspritzenden Ottomotoren neben einer bis zu 7 % höheren Nennleistung insbesondere geringere HC-Emissionen aufweisen konnten. Die geringeren HC-Emissionen wurden erreicht bei Vorliegen einer der nachfolgenden Spezifikationen:
- Die Einspritzdüse hat eine Einbaulage im Bereich -20° bis +50° bezogen auf den kreisförmigen Zylinderquerschnitt (negative Gradzahl entspricht Ausrichtung zum Zylinderkopf hin, 0° entspricht Ausrichtung parallel zum kreisförmigen Zylinderquerschnitt, positive Gradzahl entspricht Ausrichtung in Richtung Kurbelwelle).
- Die Mittellage des Einspritzstrahls am Injektoraustritt der Einspritzdüse hat einen Einspritzwinkel im Bereich -5° bis -45° oder 70° bis 90° bezogen auf den kreisförmigen Zylinderschnitt (Ausrichtung hier oben).
- Der Einspritzdruck beträgt mindestens 40 bar, vorzugsweise mindestens 60 bar. Vorzugsweise ist der maximale Einspritzdruck 2000 bar und insbesondere maximal 1000 bar.
- Der Einspritzbeginn erfolgt 330° bis 150° vor Zünd-OT, insbesondere 280° bis 250° vor Zünd-OT.

Mit diesen Spezifikationen wird einzeln oder auch in Kombination eine Einspritzung derart erreicht, dass der Kraftstoff genügend im Brennraum verteilt ist beziehungsweise nur geringe Wandfilmeffekte ausbildet. Hierdurch wird gegenüber dem Saugrohreinspritzer bei gleichartigem Katalysator auch nach Alterung des Katalysators eine bis zu 50 % geringere Emissionen, insbesondere bei HC-Emissionen, erreicht. Damit wird es möglich, direkteinspritzende Ottomotoren, insbesondere, wenn sie mindestens eine der obigen Spezifikationen erfüllen, mit den erfindungsgemäßen Katalysatorvolumen - beziehungsweise Katalysatoredelmetallbeladungsspezifikationen - zu versehen, wobei dennoch auch nach einer vorgeschriebenen Alterung im NEFZ die EU IV-Norm erfüllt wird.

Bevorzugt wird erfindungsgemäß ein Katalysatorvolumen (KV) < 0,7 und insbesondere < 0,6 x Motorhubvolumen (VH). Bei Bestimmung des Katalysatorvolumens (KV) über die Motornennleistung (PNENN) wird ein Katalysatorvolumen (KV) von < 1,15 I, insbesondere von < 1,00 I pro 100 kW Motornennleistung (PNENN), bevorzugt, wobei ein Katalysatorvolumen (KV) von < 0,85 I pro 100 kW Motornennleistung (PNENN) optimal ist.

Die mittlere spezifische Edelmetallbeladung des oder der Katalysator/en des Katalysatorsystems beträgt vorzugsweise ≤ 2,87, g/dm³ (80g/ft³). Bei Vorhandensein von mindestens einem Vorkatalysator kann der/die Vorkatalysator/en eine um bis zu 70 %, vorzugsweise bis zu 50 %, optimal bis zu 30 %, höhere spezifische Edelmetallbeladung aufweisen als der/die Hauptkatalysator/en. Wobei vorzugsweise die gesamte Edelmetallmasse des Abgasreinigungssystems bevorzugt bei < 1,7 Gramm, besonders bevorzugt bei < 1,4 Gramm, optimal bei < 1,2 Gramm, perfekt bei < 1,0 Gramm, pro Liter Motorhubraum VH oder bevorzugt bei < 3 Gramm, insbesondere bei < 2,5 Gramm, optimal bei < 2,2 Gramm, perfekt bei < 2 Gramm, pro 100 kW Nennleistung des Ottomotors liegt.

Der direkteinspritzende Ottomotor ist in < 7 %, insbesondere in < 5 %, vorzugsweise in < 3 %, optimal in 0 %, aller Betriebspunkte schichtladefähig. Bei dem Ottomotor handelt es sich bevorzugt um einen freisaugenden Motor.

Bei der Ausgestaltung des Katalysatorsystem sind vielfältige Variationen möglich. So kann ein einzelner Katalysator, mindestens zwei parallel angeordnete Katalysatoren, ein Hauptkatalysator mit mindestens zwei parallel angeordneten Vorkatalysatoren und parallel angeordnete Vorkatalysatoren mit parallel angeordneten Hauptkatalysatoren verwendet werden.

Bei Verwendung eines einzigen stromab des Ottomotors angeordneten Katalysators ist dieser vorzugsweise < 800 mm, insbesondere < 500 mm, optimal < 300 mm Abgaslauflänge vom nächstgelegenen Auslassventil des Ottomotors entfernt. Das Katalysatorsystem kann aber auch zumindest zwei parallel geschaltete Katalysatoren aufweisen, welche jeweils < 800 mm, bevorzugt < 500 mm, optimal < 300 mm Abgaslauflänge hinter dem jeweils nächstgelegenen Auslassventil angeordnet sind.

Bei einer anderen Ausführungsform der erfindungsgemäßen Verbrennungsmotoranlage weist das Katalysatorsystem einen Vorkatalysator und einen nachgeschalteten Hauptkatalysator auf, der vorzugsweise vom Vorkatalysator > 100 mm beabstandet ist. Der Vorkatalysator ist vorzugsweise, analog zur Ausführungsform mit einem einzigen Katalysator, < 800 mm, bevorzugt < 500 mm Abgaslauflänge hinter dem nächstgelegenen Auslassventil angeordnet. Dabei weist der Vorkatalysator ein Volumen von maximal 70 %, vorzugsweise maximal 50 %, ideal maximal 30 % des nachgeschalteten Hauptkatalysators auf.

Erfindungsgemäß möglich ist auch eine Anordnung mit zumindest zwei parallel geschalteten Vorkatalysatoren, welche jeweils < 800 mm, bevorzugt < 500 mm, ideal 350 mm Abgaslauflänge hinter dem jeweils nächstgelegenen Auslassventil angeordnet sind, und zumindest einem diesen Vorkatalysatoren nachgeschalteten Hauptkatalysator. Dabei weisen die Vorkatalysatoren zusammen ein Volumen von maximal 70 %, bevorzugt maximal 50 %, des oder der nachgeschalteten Hauptkatalysator/en auf.

Bei Verwendung eines einzigen Katalysators oder bei Vorliegen von Vor- und Hauptkatalysatoren basieren der einzige Katalysator und der beziehungsweise die Hauptkatalysatoren vorzugsweise auf einem keramischen Träger. Dieser keramische Träger weist bevorzugt eine Zelldichte von > 500 cpsi auf und das Produkt aus Zelldichte (in cpsi=Zellen pro Quadratzoll) und Zellwandstärke (in mil=tausendstel Zoll) liegt bei unter 2700, entsprechend 0,1063 bei Umrechnung der Zelldichte auf Quadratmillimeter und der Zellwandstärke auf Millimeter.

Der oder die Vorkatalysatoren können alternativ einen Träger auf Metallfolienbasis aufweisen. Dieser weist bevorzugterweise eine Zelldichte von > 500 cpsi auf und das Produkt aus Zelldichte (in cpsi=Zellen pro Quadratzoll) und Zellwandstärke (in my=tausendstel Millimeter) liegt bei unter 30000, bevorzugt unter 20000, entsprechend < 46,5, bevorzugt < 31 bei Angabe der Zelldichte in Zellen pro Quadratmillimeter.

Die erfindungsgemäße Verbrennungsmotoranlage mit thermisch ungeschädigtem Abgasreinigungssystem gewährleistet trotz wesentlicher Reduzierung der Edelmetallkosten für das Katalysatorsystem vorteilhafterweise eine Emissionssicherheit nach dem Neuen Europäischen Fahrzyklus (NEFZ).

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: in einer schematischen Darstellung die Verbrennungsmotoranlage mit einem Katalysator;
- Figur 2: in einer schematischen Darstellung die Verbrennungsmotoranlage mit einem Vorkatalysator und einem Hauptkatalysator;
- Figur 3: in einer schematischen Darstellung die Verbrennungsmotoranlage mit zwei Vorkatalysatoren und einem Hauptkatalysator und
- Figur 4: in einer schematischen Darstellung die Verbrennungsmotoranlage mit zwei Vorkatalysatoren und jeweils einem nachgeordnetem Hauptkatalysator.

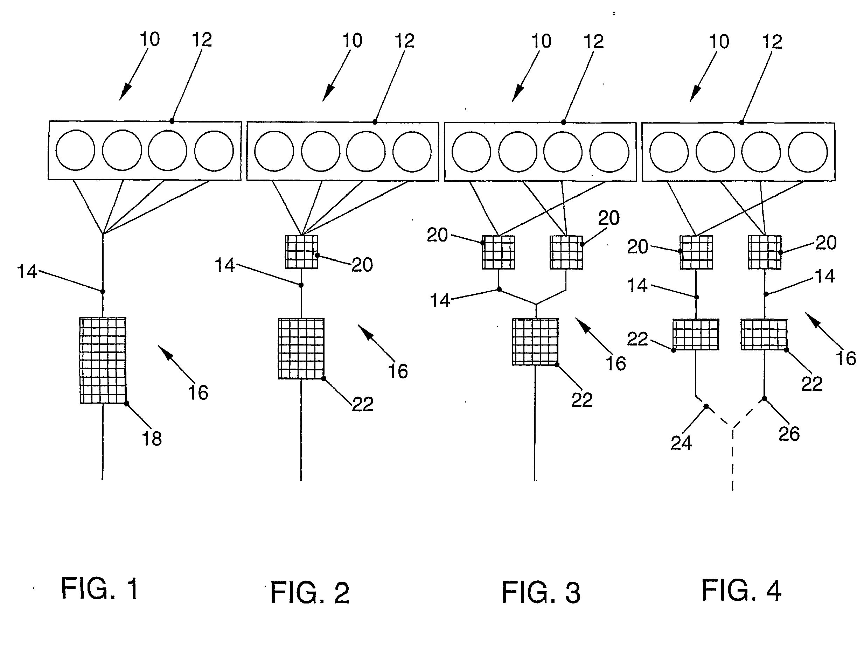

Die Figuren 1 bis 4 stellen jeweils eine erfindungsgemäße Verbrennungsmotoranlage 10 dar, die einen Ottomotor 12 mit nachgeordneter Abgasanlage 14 aufweist, wobei in der Abgasanlage 14 jeweils mindestens ein Katalysator zur Ausbildung eines Katalysatorsystems 16 befindlich ist.

Figur 1 zeigt eine Verbrennungsmotoranlage 10, die über einen einzigen motornahen Katalysator 18 verfügt, der optimalerweise < 300 mm Abgaslauflänge vom nächstgelegenen, nicht näher dargestellten Auslassventil des Ottomotors 12 angeordnet ist. Eine Verbrennungsmotoranlage 10, die über einen Vorkatalysator 20 und einen nachgeordneten Hauptkatalysator 22 verfügt, die mindestens 100 mm voneinander beabstandet sind, ist in Figur 2 dargestellt. Die Abgaslauflänge zum Vorkatalysator 20 vom nächstgelegenen Auslassventil des Ottomotors 12 wird äquivalent zur Ausführungsform gemäß Figur 1 gewählt. Bei der Ausführungsform der Verbrennungsmotoranlage 10 gemäß Figur 3 sind zwei Vorkatalysatoren 20 vorgesehen, die unterschiedlichen Zylindern des Ottomotors 12 zugeordnet sind. Beiden Vorkatalysatoren 20 ist gemeinsam ein Hauptkatalysator 22 nachgeordnet. Hingegen zeigt Figur 4 eine Ausführungsform der Verbrennungsmotoranlage 10, die analog zu Figur 3 zwei Vorkatalysatoren 20 aufweist, denen jedoch jeweils ein Hauptkatalysator 22 nachgeordnet ist, wobei die beiden Stränge 24, 26 der Abgasanlage 14 hinter den Hauptkatalysatoren 22 zusammengeführt werden. Die Abgaslauflängen und die Abstände der Vorkatalysatoren 20 zu den Hauptkatalysatoren werden, wie bei den anderen Ausführungsformen beschrieben, gewählt.

### BEZUGSZEICHENLISTE

- 10: Verbrennungsmotoranlage
- 12: Ottomotor
- 14: Abgasanlage
- 16: Katalysatorsystem
- 18: Katalysator
- 20: Vorkatalysator
- 22: Hauptkatalysator
- 24: Strang der Abgasanlage
- 26: Strang der Abgasanlage

## Patentansprüche

1. Verbrennungsmotoranlage (10), die einen direkteinspritzenden Ottomotor (12), der nicht oder nur zu einem geringen Anteil schichtladefähig ist, und ein dem Ottomotor (12) nachgeordnetes Katalysatorsystem (16), das mindestens einen Katalysator (18) besitzt, aufweist, **dadurch gekennzeichnet, dass** das Katalysatorsystem (16) insgesamt in Katalysatorvolumen (KV) von unter 0,8 x Motorhubvolumen (VH) oder von unter 1,3 l pro 100 kW Motornennleistung (PNENN) aufweist und dass die mittlere spezifische Edelmetallbeladung des mindestens einen Katalysators (18) des Katalysatorsystems (16) unter 3,59 g/dm³ liegt, wobei die gesamte Edelmetallmasse des mindestens einen Katalysators (18) unter 2 g pro Liter Motorhubraum (VH) oder unter 3,5 g pro 100 kW Nennleistung (PNENN) des Ottomotors (12) liegt.

2. Verbrennungsmotoranlage nach Anspruch 1, **dadurch gekennzeichnet, dass** das Katalysatorsystem (16) insgesamt ein Katalysatorvolumen (KV) von <0,7 x Motorhubvolumen (VH) aufweist, insbesondere ein Katalysatorvolumen (KV) von < 0,6 x Motorhubvolumen (VH).

3. Verbrennungsmotoranlage nach Anspruch 1, **dadurch gekennzeichnet, dass** das Katalysatorsystem (16) ein Katalysatorvolumen (KV) von < 1,15 I pro 100 kW Motornennleistung (PNENN) aufweist, insbesondere von < 1,00 I pro 100 kW, vorzugsweise von < 0,85 I pro 100 kW.

4. Verbrennungsmotoranlage nach einem der Ansprüche 1 bis 3, **dadurch gekennzeichnet, dass** das Katalysatorsystem (16) aus mindestens zwei parallel angeordneten Katalysatoren (18) oder einem Hauptkatalysator (22) mit mindestens zwei parallel angeordneten Vorkatalysatoren (20) oder mindestens zwei parallel angeordneten Hauptkatalysatoren (22) mit jeweils zumindest einem Vorkatalysator (20) besteht.

5. Verbrennungsmotoranlage nach einem der Ansprüche 1 bis 4, **dadurch gekennzeichnet, dass** die mittlere spezifische Edelmetallbeladung des mindestens einen Katalysators (18) des Katalysatorsystems (16) ≤ 2,87 g/dm³ beträgt, insbesondere ≤ 2,15 g/dm³.

6. Verbrennungsmotoranlage nach einem der Ansprüche 1 bis 5, **dadurch gekennzeichnet, dass** der oder die Vorkatalysatorlen (20) eine um bis zu 70 %, insbesondere um bis zu 50 %, vorzugsweise um bis zu 30 % höhere spezifische Edelmetallbeladung aufweist als der oder die Hauptkatalysator/en (22).

7. Verbrennungsmotoranlage nach einem der Ansprüche 1 bis 6, **dadurch gekennzeichnet, dass** die gesamte Edelmetallmasse des Katalysatorsystems (16) bei < 1,6 g pro Liter Motorhubraum (VH) des Ottomotors (12) liegt, insbesondere bei < 1,2 g pro Liter Motorhubraum, vorzugsweise bei < 1,0 g pro Liter Motorhubraum und besonderes bevorzugt bei < 0,8 g pro Liter Motorhubraum.

8. Verbrennungsmotoranlage nach einem der Ansprüche 1 bis 6, **dadurch gekennzeichnet, dass** die gesamte Edelmetallmasse des Katalysatorsystems (16) bei < 3 g pro 100 kW Nennleistung des Ottomotors (12) liegt, insbesondere bei < 2,5 g pro 100 kW Nennleistung, vorzugsweise bei < 2,1 g pro 100 kW Nennleistung und besonderes bevorzugt bei < 1,7 g pro 100 kW Nennleistung.

9. Verbrennungsmotoranlage nach einem der Ansprüche 1 bis 8, **dadurch gekennzeichnet, dass** der mindestens eine Katalysator (18) oder der mindestens eine Vorkatalysator (20) < 800 mm Abgaslauflänge vom nächstgelegenen Auslassventil des Ottomotors (12) entfernt sind, insbesondere < 500 mm Abgaslauflänge, vorzugsweise < 300 mm Abgaslauflänge.

10. Verbrennungsmotoranlage nach einem der Ansprüche 4 bis 9, **dadurch gekennzeichnet, dass** der mindestens eine Vorkatalysator (20) und der mindestens eine nachgeschaltete Hauptkatalysator (22) zueinander einen Abstand von > 100 mm aufweisen.

11. Verbrennungsmotoranlage nach einem der Ansprüche 4 bis 10, **dadurch gekennzeichnet, dass** der mindestens eine Vorkatalysator (20) ein Volumen von maximal 70% des mindestens einen nachgeschalteten Hauptkatalysators (22) aufweist, insbesondere ein Volumen von maximal 50 %, vorzugsweise ein Volumen von maximal 30 %.

12. Verbrennungsmotoranlage nach einem der Ansprüche 1 bis 11, **dadurch gekennzeichnet, dass** der oder die Katalysatoren des Katalysatorsystems (16), insbesondere der mindestens eine Katalysator (18) oder der mindestens eine Hauptkatalysator (22), auf einem keramischen Träger basieren.

13. Verbrennungsmotoranlage nach Anspruch 12, **dadurch gekennzeichnet, dass** der beziehungsweise die auf einem keramischen Träger basierenden Katalysator/en (18) oder Hauptkatalysatoren (22) eine Zelldichte von > 500 cpsi aufweisen und das Produkt aus Zelldichte (in cpsi=Zellen pro Quadratzoll) und Zellwandstärke (in mil=tausendstel Zoll) bei unter 2700 liegt, entsprechend 0,1063 bei Angabe der Zelldichte in Zellen pro Quadratmillimeter und Zellwandstärken in Millimeter.

14. Verbrennungsmotoranlage nach einem der Ansprüche 4 bis 13, **dadurch gekennzeichnet,** das der mindestens eine Vorkatalysator (20) einen Träger auf Metallfolienbasis aufweist.

15. Verbrennungsmotoranlage nach Anspruch 14, **dadurch gekennzeichnet, dass** der mindestens eine Vorkatalysator (20) eine Zelldichte von > 500 cpsi aufweist und das Produkt aus Zelldichte (in cpsi=Zellen pro Quadratzoll) und Zellwandstärke (in my=tausendstel Millimeter) bei unter 30000 liegt, bevorzugt unter 20000 liegt, entsprechend unter 46,5, bevorzugt unter 31 bei Angabe der Zelldichte in Zellen pro Quadratmillimeter.

16. Verbrennungsmotoranlage nach einem der Ansprüche 1 bis 15, **dadurch gekennzeichnet, dass** der Ottomotor (12) in < 7 % aller Betriebspunkte schichtladefähig ist, insbesondere in < 5 % aller Betriebspunkte, vorzugsweise in < 3 % aller Betriebspunkte.

17. Verbrennungsmotoranlage nach einem der Ansprüche 1 bis 15, **dadurch gekennzeichnet, dass** der Ottomotor (12) freisaugend ist.

## Claims

1. Internal combustion engine installation (10), comprising a direct-injection petrol engine (12), which has no or only a limited stratified charge capability, and a catalyst system (16), which is disposed downstream of the petrol engine (12) and has at least one catalyst (18), **characterized in that** the catalyst system (16) has in total a catalyst volume (CV) of below 0.8 x cubic capacity (CC) or of below 1.3 1 per 100 kW rated engine power (P_{RATED}), and **in that** the average specific precious metal load of the at least one catalyst (18) of the catalyst system (16) lies below 3.59 g/dm³, the entire precious metal mass of the at least one catalyst (18) lying below 2 g per litre cubic capacity (CC) or below 3.5 g per 100 kW rated power (P_{RATED}) of the petrol engine (12).

2. Internal combustion engine installation according to Claim 1, **characterized in that** the catalyst system (16) has in total a catalyst volume (CV) of < 0.7 x cubic capacity (CC), in particular a catalyst volume (CV) of < 0.6 x cubic capacity (CC).

3. Internal combustion engine installation according to Claim 1, **characterized in that** the catalyst system (16) has a catalyst volume (CV) of < 1.15 l per 100 kW rated engine power (P_{RATED}), in particular of < 1.00 l per 100 kW, preferably of < 0.85 l per 100 kW.

4. Internal combustion engine installation according to one of Claims 1 to 3, **characterized in that** the catalyst system (16) consists of at least two parallel-disposed catalysts (18), or a main catalyst (22) having at least two parallel-disposed pre-catalysts (20), or at least two parallel-disposed main catalysts (22) having at least one pre-catalyst (20) each.

5. Internal combustion engine installation according to one of Claims 1 to 4, **characterized in that** the average specific precious metal load of the at least one catalyst (18) of the catalyst system (16) amounts to ≤ 2.87 g/dm³, in particular ≤ 2.15 g/dm³.

6. Internal combustion engine installation according to one of Claims 1 to 5, **characterized in that** the pre-catalyst(s) (20) has/have a specific precious metal load up to 70%, in particular up to 50%, preferably up to 30%, higher than the main catalyst(s) (22).

7. Internal combustion engine installation according to one of Claims 1 to 6, **characterized in that** the total precious metal mass of the catalyst system (16) lies at < 1.6 g per litre cubic capacity (CC) of the petrol engine (12), in particular at < 1.2 g per litre cubic capacity, preferably at < 1.0 g per litre cubic capacity, and particularly preferably at < 0.8 g per litre cubic capacity.

8. Internal combustion engine installation according to one of Claims 1 to 6, **characterized in that** the total precious metal mass of the catalyst system (16) lies at < 3 g per 100 kW rated power of the petrol engine (12), in particular at < 2.5 g per 100 kW rated power, preferably at < 2.1 g per 100 kW rated power, and particularly preferably at < 1.7 g per 100 kW rated power.

9. Internal combustion engine installation according to one of Claims 1 to 8, **characterized in that** the at least one catalyst (18) or the at least one pre-catalyst (20) is/are at a distance of < 800 mm exhaust-gas path length from the nearest-situated outlet valve of the petrol engine (12), in particular < 500 0 mm exhaust-gas path length, preferably < 300 mm exhaust-gas path length.

10. Internal combustion engine installation according to one of Claims 4 to 9, **characterized in that** the at least one pre-catalyst (20) and the at least one downstream main catalyst (22) have a distance apart of > 100 mm.

11. Internal combustion engine installation according to one of Claims 4 to 10, **characterized in that** the at least one pre-catalyst (20) has a volume of maximally 70% of the at least one downstream main catalyst (22), in particular a volume of maximally 50%, preferably a volume of maximally 30%.

12. Internal combustion engine installation according to one of Claims 1 to 11, **characterized in that** the catalyst(s) of the catalyst system (16), in particular the at least one catalyst (18) or the at least one main catalyst (22), is/are based on a ceramic substrate.

13. Internal combustion engine installation according to Claim 12, **characterized in that** the catalyst(s) (18) or main catalysts (22) based on a ceramic substrate have a cell density of > 500 cpsi, and the product of cell density (in cpsi = cells per square inch) and cell wall thickness (in mil = thousands of an inch) lies at below 2,700, equivalent to 0.1063 if the cell density is quoted in cells per square millimetre and cell wall thicknesses are quoted in millimetres.

14. Internal combustion engine installation according to one of Claims 4 to 13, **characterized in that** the at least one pre-catalyst (20) has a metal-foil based substrate.

15. Internal combustion engine installation according to Claim 14, **characterized in that** the at least one pre-catalyst (20) has a cell density of > 500 cpsi, and the product of cell density (in cpsi = cells per square inch) and cell wall thickness (in my = thousands of a millimetre) lies at below 30,000, preferably below 20,000, equivalent to below 46.5, preferably below 31, if the cell density is quoted in cells per square millimetre.

16. Internal combustion engine installation according to one of Claims 1 to 15, **characterized in that** the petrol engine (12) has a stratified charge capability in < 7% of all operating points, in particular in < 5% of all operating points, preferably in < 3% of all operating points.

17. Internal combustion engine installation according to one of Claims 1 to 15, **characterized in that** the petrol engine (12) is naturally aspirated.

## Revendications

1. Dispositif de moteur à combustion interne (10), comportant un moteur à carburation externe (12) à injection directe, qui n'est pas apte, ou qui est apte seulement dans une faible mesure, à être à charge stratifiée, et un système de catalyseurs (16) monté en aval du moteur à carburation externe (12), comportant au moins un catalyseur (18), **caractérisé en ce que** le système de catalyseurs (16) présente globalement un volume de catalyseur (KV) inférieur à 0,8 x la cylindrée du moteur (VH) ou inférieur à 1,3 1 par 100 kW de puissance nominale du moteur (PNENN) et que la charge moyenne spécifique en métal précieux du au moins un catalyseur (18) du système de catalyseurs (16) est inférieure à 3,59 g/dm³, l'ensemble de la masse de métal précieux du au moins un catalyseur (18) étant inférieure à 2 g par litre de cylindrée (VH) ou inférieure 3,5 g par 100 kW de puissance nominale (PNENN) du moteur à carburation externe (12).

2. Dispositif de moteur à combustion interne selon la revendication 1, **caractérisé en ce que** le système de catalyseurs (16) présente globalement un volume de catalyseur (KV) qui est < 0,7 x la cylindrée du moteur (VH), notamment un volume de catalyseur (KV) qui est < 0,6 x la cylindrée du moteur (VH).

3. Dispositif de moteur à combustion interne selon la revendication 1, **caractérisé en ce que** le système de catalyseurs (16) présente un volume de catalyseur (KV) qui est < 1,15 l par 100 kW de puissance nominale du moteur (PNENN), notamment < 1,00 l par 100 kW, de préférence de < 0,85 l par 100 kW.

4. Dispositif de moteur à combustion interne selon l'une quelconque des revendications 1 à 3, **caractérisé en ce que** le système de catalyseurs (16) est constitué d'au moins deux catalyseurs (18) disposés en parallèle ou d'un catalyseur principal (22) avec au moins deux précatalyseurs (20) disposés en parallèle ou d'au moins deux catalyseurs principaux (22) disposés en parallèle, avec chacun au moins un précatalyseur (20).

5. Dispositif de moteur à combustion interne selon l'une quelconque des revendications 1 à 4, **caractérisé en ce que** la charge moyenne spécifique en métal précieux du au moins un catalyseur (18) du système de catalyseurs (16) est ≤ 2, 87 g/dm³, notamment ≤ 2,15 g/dm³.

6. Dispositif de moteur à combustion interne selon l'une quelconque des revendications 1 à 5, **caractérisé en ce que** le ou les précatalyseurs (20) présentent une charge en métal précieux de jusqu'à 70 %, notamment de jusqu'à 50%, de préférence de jusqu'à 30% en plus par rapport à celle du ou des catalyseurs principaux (22).

7. Dispositif de moteur à combustion interne selon l'une quelconque des revendications 1 à 6, **caractérisé en ce que** l'ensemble de la masse de métal précieux du système de catalyseurs (16) est < 1,6 g par litre de cylindrée (VH) du moteur à carburation externe (12), notamment elle est < 1,2 g par litre de cylindrée, de préférence, elle est < 1,0 g par litre de cylindrée et de façon particulièrement préférée, elle est < 0,8 g par litre de cylindrée.

8. Dispositif de moteur à combustion interne selon l'une quelconque des revendications 1 à 6, **caractérisé en ce que** l'ensemble de la masse de métal précieux du système de catalyseurs (16) est < 3 g par 100 kW de puissance nominale du moteur à carburation externe (12), elle est notamment < 2,5 g par 100 kW de puissance nominale, de préférence, elle est < 2,1 g par 100 kW de puissance nominale et de façon particulièrement préférée, elle est < 1,7 g par 100 kW de puissance nominale.

9. Dispositif de moteur à combustion interne selon l'une quelconque des revendications 1 à 8, **caractérisé en ce que** le au moins un catalyseur (18) ou le au moins un précatalyseur (20) est éloigné de < 800 mm de longueur de projection des gaz d'échappement de la soupape de sortie la plus proche du moteur à carburation externe (12), notamment de < 500 mm de longueur de projection des gaz d'échappement, de préférence de < 300 mm de longueur de projection des gaz d'échappement.

10. Dispositif de moteur à combustion interne selon l'une quelconque des revendications 4 à 9, **caractérisé en ce que** le au moins un précatalyseur (20) et le au moins un catalyseur principal (22) monté en aval présentent une distance mutuelle qui est > 100 mm.

11. Dispositif de moteur à combustion interne selon l'une quelconque des revendications 4 à 10, **caractérisé en ce que** le au moins un précatalyseur (20) présente un volume de 70% maximum du au moins un catalyseur principal (22) monté en aval, notamment un volume de 50% maximum, de préférence un volume de 30% maximum.

12. Dispositif de moteur à combustion interne selon l'une quelconque des revendications 1 à 11, **caractérisé en ce que** le ou les catalyseurs du système de catalyseurs (16), notamment le au moins un catalyseur (18) ou le au moins un catalyseur principal (22) sont basés sur un support en céramique.

13. Dispositif de moteur à combustion interne selon la revendication 12, **caractérisé en ce que** le ou les catalyseurs (18) ou catalyseurs principaux (22) basés sur un support en céramique présentent une densité cellulaire > 500 cpsi et **en ce que** le produit de la densité cellulaire (en cpsi = cellules par pouce carré) et de l'épaisseur de paroi des cellules (en mil = millièmes de pouce) est inférieur à 2700, correspondant à 0,1063 si on indique la densité cellulaire en cellules par millimètre carré et les épaisseurs de paroi cellulaire en millimètres.

14. Dispositif de moteur à combustion interne selon l'une quelconque des revendications 4 à 13, **caractérisé en ce que** le au moins un précatalyseur (20) comporte un support sur base de film métallique.

15. Dispositif de moteur à combustion interne selon la revendication 14, **caractérisé en ce que** le au moins un précatalyseur (20) présente une densité cellulaire > 500 cpsi et **en ce que** le produit de la densité cellulaire (en cpsi = cellules par pouce carré) et de l'épaisseur de paroi des cellules (en mil = millièmes de millimètre) est inférieur à 30000, de préférence inférieur à 20000, correspondant à inférieur à 46,5, de préférence inférieur à 31 si on indique la densité cellulaire en cellules par millimètre carré.

16. Dispositif de moteur à combustion interne selon l'une quelconque des revendications 1 à 15, **caractérisé en ce que** le moteur à carburation externe (12) est apte à être à charge stratifiée à < 7 % de tous les points de fonctionnement dynamique, notamment à < 5 % de tous les points de fonctionnement dynamique, de préférence à < 3 % de tous les points de fonctionnement dynamique.

17. Dispositif de moteur à combustion interne selon l'une quelconque des revendications 1 à 15, **caractérisé en ce que** le moteur à carburation externe (12) est à aspiration naturelle.
